# EUROPÄISCHE PATENTANMELDUNG

(11) **EP 1 164 741 A2**
(43) Veröffentlichungstag der Anmeldung: **19.12.2001**
(21) Anmeldenummer: 01114416.9
(22) Anmeldetag: 15.06.2001
(51) Int. Cl.: H04L 5/14, H04L 25/02

(54) **Verfahren und Schaltungsanordnung zur Übertragung von Signalen bidirektionaler Signalverbindungen**

(30) Priorität: 15.06.2000 DE 10029493
(71) Anmelder: BITEX Computer Electronic GmbH, 55124 Mainz (DE)
(72) Erfinder: Janz, Norbert, 63071 Offenbach (DE); Rudnitzki, Ottmar, 55127 Mainz (DE)
(74) Vertreter: Stoffregen, Hans-Herbert, Dr. Dipl.-Phys.

(57) **Zusammenfassung**

Die Erfindung bezieht sich auf ein Verfahren und eine Schaltungsanordnung (10) zur Übertragung von Signalen bidirektionaler Signalverbindungen (12). Um den Anwendungsbereich einer bidirektionalen Signalverbindung zu verbessern und insbesondere eine galvanische Trennung und/oder eine Verlängerung der Signalverbindung und/oder eine Erhöhung der Störfestigkeit von komplexen Signalverbindungen wie Bussystemen zu erreichen, bei denen präzise definierte Buseigenschaften exakt eingehalten werden müssen, ist vorgesehen, dass ein aktueller Signalzustand der Signalverbindung (12) mittels Signalkoppler (24, 26) erkannt und zumindest einer Ablaufsteuerung (42) unmittelbar und/oder galvanisch getrennt zugeführt wird, dass die zumindest eine Ablaufsteuerung (42) den aktuellen Signalzustand registriert und auswertet und in Abhängigkeit eines in der Ablaufsteuerung (42) hinterlegten spezifischen Signalprotokolls Status-/Steuerinformationen in Echtzeit erzeugt, dass die Status-und/oder Steuerinformationen unmittelbar und/oder galvanisch getrennt zu dem Signalkoppler /24, 26) übertragen werden und dass aus den Status- und/oder Steuerinformationen die zur Funktion der Signalverbindung (12) notwendigen Signalzustände erzeugt werden.

## Beschreibung

Die Erfindung bezieht sich einerseits auf ein Verfahren zur Übertragung von Signalen bidirektionaler Signalverbindungen wahlweise mit oder ohne galvanische Trennung und andererseits auf Schaltungsanordnungen zur Übertragung von Signalen bidirektionaler Signalverbindungen, umfassend zumindest zwei Signalkoppler sowie wahlweise eine galvanische Trenneinrichtung, über die die Signalkoppler miteinander gekoppelt sind.

Aus der DE 33 29 570 Al ist eine Schaltungsanordnung zur galvanischen Entkopplung von bidirektional betriebenen Busleitungen bekannt. Dabei ist für jede Übertragungsrichtung ein mit einem Ausgang eines ODER-Gatters empfangsseitig verbundener Opto-Koppler vorgesehen, wobei ein erster Eingang des ODER-Gatters der einen Übertragungsrichtung über eine Umkehrstufe mit der Sendeseite des Opto-Kopplers der anderen Übertragungsrichtung und jeweils ein zweiter Eingang des ODER-Gatters mit der Sendeseite des Opto-Kopplers der anderen Übertragungseinrichtung und mit der Busleitung verbunden ist. Mit Hilfe dieser Schaltungsanordnung erfolgt eine jeweilige Sperrung der nicht benutzten Übertragungseinrichtung, wenn in der anderen Richtung eine Datenübertragung stattfindet.

Zwar wird eine Verriegelung bei bidirektionaler Verbindung verhindert; sobald jedoch beide Teilnehmer gleichzeitig den Bus treiben, wird bei einseitiger Deaktivierung des Treibers ein Störimpuls erzeugt.

Auch sind galvanische Trenneinrichtungen für uni- und/oder bidirektionale Busverbindungen wie zum Beispiel RS232, RS422, RS485, Ethernet oder CAN bekannt, wobei die Busteilnehmer die Steuerung der Datenausgabe kontrollieren. Durch verschiedene Verfahren wie z. B. Kollisionserkennung oder "Token" werden Datenverluste vermieden, wenn mehr als ein Teilnehmer gleichzeitig Daten auf den Bus ausgibt. Auch verwenden Busse wie Ethernet keine statischen Pegel, so dass diese mit einfachen Mitteln, wie z. B. mit Hilfe von Übertragern entkoppelt werden können.

Der vorliegenden Erfindung liegt das Problem zu Grunde, ein Verfahren und eine Schaltungsanordnung der zuvor genannten Art dahingehend weiterzubilden, dass der Anwendungsbereich einer bidirektionalen Signalverbindung verbessert wird. Insbesondere soll eine galvanische Trennung und/oder eine Verlängerung der Signalverbindung und/oder eine Erhöhung der Störfestigkeit von komplexen Signalverbindungen wie Bussystemen erreicht werden, bei denen präzise definierte Buseigenschaften exakt eingehalten werden müssen, um deren Funktionsfähigkeit einzuhalten und die zur Funktion den statischen Zustand, bidirektionales Verhalten und exaktes Timing voraussetzen. Auch soll gewährleistet sein, dass zwei Teilnehmer gleichzeitig die Busverbindung treiben können.

Das Problem wird verfahrensmäßig dadurch gelöst,
dass ein aktueller Signalzustand der Signalverbindung mittels Signalkoppler erkannt und zumindest einer Ablaufsteuerung unmittelbar und/oder galvanisch getrennt zugeführt wird,
dass die zumindest eine Ablaufsteuerung den aktuellen Signalzustand registriert und auswertet und in Abhängigkeit eines in der Ablaufsteuerung hinterlegten spezifischen Signalprotokolls Status-/Steuerinformationen in Echtzeit erzeugt,
dass die Status- und/oder Steuerinformationen unmittelbar und/oder galvanisch getrennt zu dem Signalkoppler übertragen werden und
dass aus den Status- und/oder Steuerinformationen die zur Funktion der Signalverbindung notwendigen Signalzustände erzeugt werden.

Durch das erfindungsgemäße Verfahren wird gewährleistet, dass die aktuellen Signal- bzw. Buszustände registriert und interpretiert werden können, wobei daraus abgeleitete Statusinformationen über eine galvanische Trenneinrichtung übertragen werden. Eine exakt definierte Vorgehensweise, die durch die Implementierung der (bus)spezifischen Timing-Spezifikation bedingt ist, verhindert eine gegenseitige Verriegelung. Zur Umwandlung der Statusinformationen in Buszustände und/oder Bussignale sind zumindest zwei Signalkoppler vorgesehen, deren Datenrichtung ebenfalls durch die zumindest eine Ablaufsteuerung gesteuert wird.

Zur Einhaltung der präzise definierten Buseigenschaften erfolgt die Steuerung in Echtzeit. Erfindungsgemäß kann das busspezifische Signalprotokoll entsprechend der Anwendung z. B. als USB-Bus-Signalprotokoll oder als 12C-Bus-Signalprotokoll oder weitere Busprotokolle hinterlegt werden. Insbesondere ist das Verfahren unabhängig von einem bestimmten Signalprotokoll und kann durch Implementierung eines spezifischen Signalprotokolls an vorgegebene oder gewünschte Bedingungen angepasst werden.

Zur Steuerung einer USB-Signalverbindung ist in der Ablaufsteuerung das busspezifische Signalprotokoll des USB-Busses abgelegt. Zur Steuerung eines 12C-Busses ist in der Ablaufsteuerung das busspezifische Signalprotokoll des 12C-Buses abgelegt. Für andere Busse kann ebenfalls ein busspezifisches Signalprotokoll abgelegt werden.

Das Problem wird durch eine Schaltungsanordnung dadurch gelöst, dass die Schaltungsanordnung zumindest eine Ablaufsteuerung mit einem implementierten spezifischen Signalprotokoll aufweist, wobei die zumindest eine Ablaufsteuerung mit den Signalkopplern zum Austausch von aktuellen Signalzuständen und/oder von Status- und/oder Steuerinformationen verbunden ist, wobei zumindest einer der Signalkoppler über die galvanische Trenneinrichtung mit der Ablaufsteuerung verbunden ist.

Es besteht die Möglichkeit, dass die Schaltungsanordnung zumindest zwei Ablaufsteuerungen umfasst, wobei zumindest eine Ablaufsteuerung mit einem der Signalkoppler unmittelbar verbunden ist und wobei Informations- und/oder Datenleitungen zwischen den Ablaufsteuerungen und/oder den Signalkopplern über die galvanische Trenneinrichtung zum Austausch von Status- und/oder Dateninformationen gekoppelt sind.

Erfindunggemäß dienen die Signalkoppler am Ein- und/oder Ausgang zur Umsetzung der (bus)spezifischen Signalpegel, damit diese von der zumindest einen Ablaufsteuerung verarbeitet werden können. Die zumindest eine Ablaufsteuerung interpretiert und registriert den aktuellen Zustand der Signalleitung und überträgt die dadurch gewonnenen Statusinformationen direkt und/oder galvanisch getrennt zu den Signalkopplern, die die entsprechenden Buszustände / Bussignale erzeugen.

### Ausführungsform am Beispiel USB:

Bei einer besonders bevorzugten Ausführungsform ist die Signalverbindung als "Universal Serial Bus" (USB) ausgebildet und umfasst Signalleitungen D+ und D-, wobei das in der oder den Ablaufsteuerungen implementierte Signalprotokoll als USB-Bus-Signalprotokoll ausgebildet ist.

In einer bevorzugten Ausführungsform ist die Ablaufsteuerung downstream-seitig angeordnet, wobei der downstream-seitige Signalkoppler zwischen der downstream-seitigen Signalverbindung und der Ablaufsteuerung angeordnet ist und wobei sämtliche Signal-und/oder Datenleitungen zu dem upstream-seitigen Signalkoppler über die galvanische Trenneinrichtung geführt sind.

Vorzugsweise sind die Signalkoppler als Sende-/Empfangseinheiten ausgebildet und umfassen einen steuerbaren Ausgangstreiber, einen ersten Leitungsempfänger und einen zweiten Leitungsempfänger.

Um von den Signalkopplern und/oder der galvanischen Trenneinrichtung hervorgerufene unterschiedliche Signallaufzeiten zu kompensieren, ist eine Laufzeitkompensation vorgesehen. Vorzugsweise sind steuerbare Laufzeitglieder L zur Erkennung/Generierung von Buszuständen wie beispielsweise "IDLE" (maximale Treiberzeit für den J-Zustand typischerweise 120 ns), "RESUME"-Erkennung downstream (typischerweise 50 µs) sowie "RESUME"-Umschaltung (nach typischerweise 1,5 ms von upstream nach down-stream) vorgesehen. Mit den Laufzeiten L werden die Signallaufzeiten der einzelnen Signale aufeinander abgestimmt. Dadurch werden Störspitzen unterdrückt und das relative Timing-Verhalten eingehalten.

Zum Treiben der Busleitung umfasst der Bustreiber zwei Eingänge/Ausgänge, die mit den Signalleitungen verbunden sind, sowie vorzugsweise drei Eingänge, die mit Steuerausgängen der Ablaufsteuerung verbunden sind, wobei ein erster Eingang zur Aktivierung/Deaktivierung des Treibers, ein zweiter Eingang zur Erzeugung eines aktiven J- oder K-Zustandes und ein dritter Eingang zur Erzeugung eines RESET- oder SEO-Zustandes bei aktivem Treiber vorgesehen ist.

Der erste Leitungsempfänger ist vorzugsweise als Differentialverstärker ausgebildet, umfassend zwei Eingänge, die mit den Signalleitungen verbunden sind und einen Ausgang, der mit einem Eingang der Ablaufsteuerung direkt und/oder über die galvanische Trennung verbunden ist. Am Ausgang des ersten Leitungsempfängers sind die aktuellen Buszustände J und K abgreifbar.

Der zweite Leitungsempfänger ist vorzugsweise als Schwellwertschalter ausgebildet mit vorzugsweise zwei invertierenden Eingängen und einem Ausgang, der mit einem Eingang der Ablaufsteuerung direkt und/oder über die galvanische Trenneinrichtung verbunden ist. Am Ausgang des Schwellwertschalters sind die Buszustände RESET, SE0 und NO DEVICE abgreifbar.

Zur Einstellung eines "IDLE"-Zustandes weist die Schaltungsanordnung vorzugsweise upstream-seitig ein Schaltelement auf, mit dem vorzugsweise die Signalleitung D+ mit vorzugsweise HIGH-Potential verbindbar ist und wobei ein Steuereingang des Schaltelementes über die galvanische Trennstrecke mit einem Ausgang der Ablaufsteuerung verbunden ist.

Um die Signallaufzeiten der einzelnen Signale aufeinander abzustimmen, weist die Schaltungsanordnung eine mit der Ablaufsteuerung verbundene Laufzeitkompensationseinrichtung auf, mit der steuerbare Laufzeitglieder L zur Erkennung/Generierung beispielsweise der Zustände "IDLE" (maximale Treiberzeit für den J-Zustand typischerweise 120ns), RESUME-Erkennung (downstream typischerweise 50 µs) sowie RESUME-Umschaltung (nach typischerweise 1,5 ms von upstream nach downstream) aufweist.

Zur Steuerung einer USB-Signalverbindung ist in der Ablaufsteuerung das busspezifische Signalprotokoll des USB-Busses abgelegt.

Zur Stromversorgung ist anzumerken, dass diese von upstream nach downstream über den Bus, durch eine separate Stromversorgung oder durch ein selbstversorgtes Device mit herausgeführtem Power-Anschluss erfolgen kann.

Bei erhöhtem Energieverbrauch kann die Stromversorgung durch eine externe Einspeisung erfolgen. Auch kann die Stromversorgung, bei erhöhtem technischen Aufwand, von der upstream-Seite her über den Bus erfolgen.

Eine Ausführungsform mit eigenständigem Erfindungscharakter bezieht sich auf eine Schaltungsanordnung zur Kopplung einer ersten Signalverbindung mit einer zweiten Signalverbindung, umfassend einen ersten Ein-/Ausgangsport mit einem ersten Signalkoppler und einen zweiten Ein-/Ausgangsport mit einem zweiten Signalkoppler. Die Schaltungsanordnung zeichnet sich dadurch aus, dass zumindest eine Ablaufsteuerung vorgesehen ist, in der ein zumindest einer Signalverbindung entsprechendes spezifisches Signalprotokoll implementiert ist , wobei die zumindest eine Ablaufsteuerung mit den Signalkopplern zum Austausch von aktuellen Signalzuständen und/oder von Status- und/oder Steuerinformationen verbunden ist .

Verfahrensmäßig zeichnet sich die nebengeordnete Erfindung dadurch aus, dass Signalzustände einer ersten Signalverbindung erfasst und ausgewertet werden und dass entsprechend eines spezifischen Signalprotokolls Status-/Steuerinfarmationen in Echtzeit erzeugt werden, welche zur Erzeugung von Signalzuständen der zweiten Signalverbindung verwendet werden.

Das Verfahren und die Schaltungsanordnung zeichnet sich insbesondere zur Kopplung von optischen Übertragungsstrecken wie Lichtleitern aus, wobei durch Verstärkung und/oder Regenerierung der Signale weite Übertragungswege erreicht werden können. Selbstverständlich ist auch eine Kopplung von elektrischen Signalverbindungen möglich. Die Schaltungsanordnung ist flexibel einsetzbar, da die Ablaufsteuerung an unterschiedliche (bus)spezifische Signalprotokolle anpassbar ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispieles.

Es zeigen:
- Fig. 1: prinzipielle Darstellung einer galvanischen Trennung einer Busverbindung,
- Fig. 2: ein Blockschaltbild einer ersten Ausführungsform einer Schaltungsanordnung zur galvanischen Trennung einer Busverbindung,
- Fig. 3: ein Blockschaltbild einer zweiten Ausführungsform einer Schaltungsanordnung zur galvanischen Trennung einer Busverbindung und
- Fig. 4: detalliertes Blockschaltbild einer Schaltungsanordnung zur galvanischen Trennung eines USB.

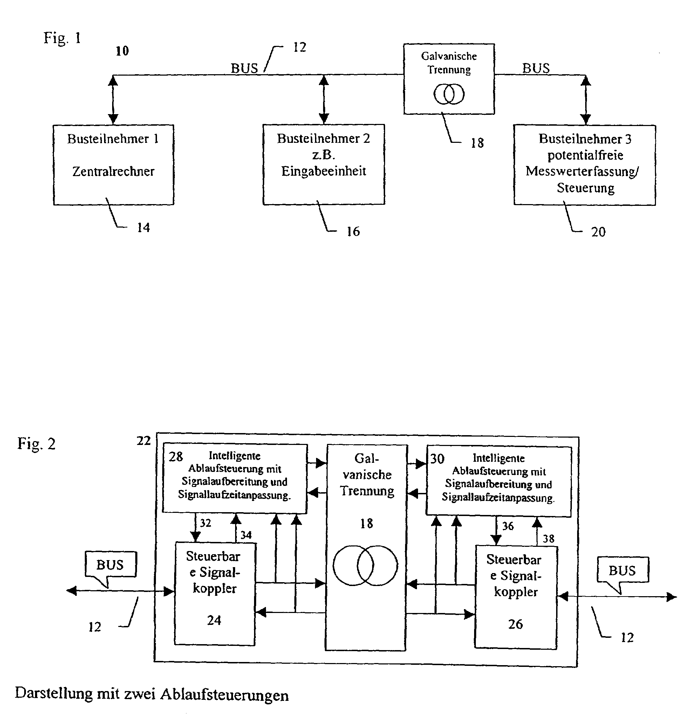

Fig. 1 zeigt eine prinzipielle Darstellung eines Bussystems 10 mit einer Busleitung 12, an der Busteilnehmer wie Zentralrechner 14 und Eingabeeinheit 16 angeschlossen sind und wobei die Busleitung 12 über eine galvanische Trenneinrichtung 18 mit zumindest einem weiteren Busteilnehmer 20 wie potentialfreier Messwerterfassung/-steuerung verbunden ist.

Fig. 2 zeigt eine erste Schaltungsanordnung 22 zur galvanischen Trennung der seriellen, bidirektionalen Busleitung 12. Die Schaltungsanordnung 22 umfasst einen ersten (upstream-seitigen) Signalkoppler 24 und einen zweiten (downstream-seitigen) Signalkoppler 26, die eingangsseitig jeweils mit der Busleitung 12 verbunden sind.

Erfindungsgemäß weist die Schaltungsanordnung 22 upstream-seitig sowie downstream-seitig jeweils eine Ablaufsteuerung 28, 30 auf, die über Daten-/Informationsleitungen 32, 34; 36, 38 jeweils mit den Signalkopplern 24, 26 verbunden sind. Intern sind sowohl die Signalkoppler 24, 26 als auch die Ablaufsteuerungen 28, 30 über die galvanische Trenneinrichtung 18 miteinander gekoppelt, so dass eine elektrische Verbindung zwischen der upstream-Seite und der downstream-Seite nicht gegeben ist.

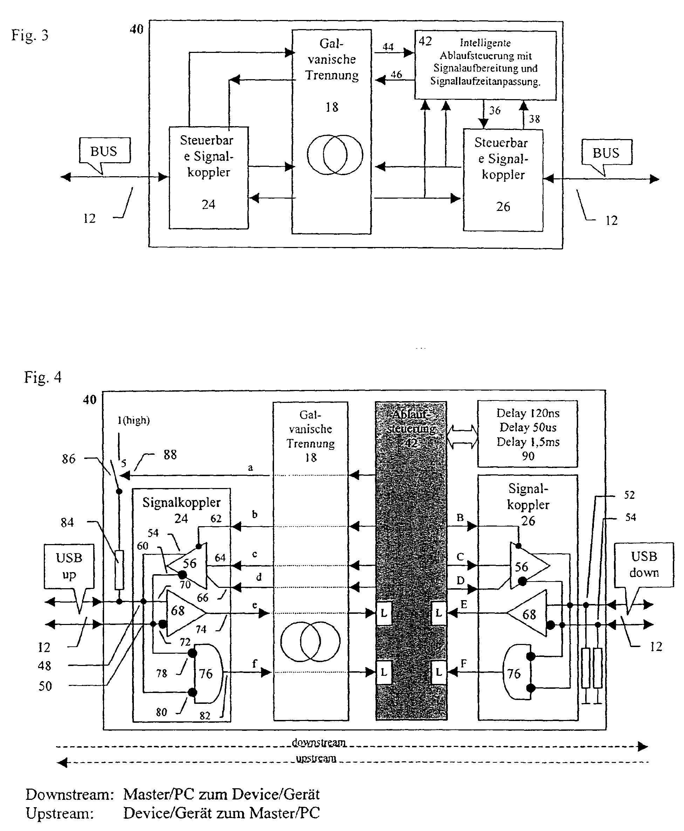

Eine zweite Ausführungsform einer Schaltungsanordnung 40 ist rein schematisch in Fig. 3 dargestellt. Die Schaltungsanordnung 40 weist eine Ablaufsteuerung 42 auf, die über den Signalkoppler 26 direkt mit dem Bus 12 verbunden ist. Weitere Verbindungen 44, 46 zwischen der Ablaufsteuerung 42 und dem upstream-seitigen Signalkoppler 24 verlaufen über die galvanische Trenneinrichtung 18. Die Ablaufsteuerung 42 bestimmt als zentrale Komponente das Verhalten der Schaltungsanordnung 40. Alle zur Steuerung notwendigen Informationen werden von den aktuellen Buszuständen, die der Ablaufsteuerung 42 über die Signalkoppler 24, 26 zugeführt werden, in Kombination mit einer in der Ablaufsteuerung abgelegten busspezifischen Bus-Timing-Spezifikation und/oder eines busspezifischen Signalprotokolls abgeleitet. Zusätzlich kontrolliert die Ablaufsteuerung 42 die Datenrichtung der Signalkoppler 24, 26 und generiert die zur Funktion des Busses notwendigen Buszustände.

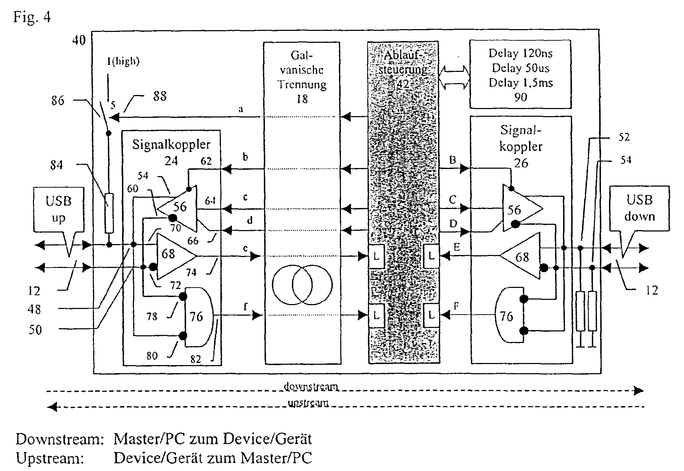

Fig. 4 zeigt eine detaillierte Darstellung der Schaltungsanordnung 40 zur galvanischen Trennung eines seriellen, bidirektionalen Busses am Beispiel des Universal-Serial-Bus (USB). Der Universal-Serial-Bus (USB) ist ein serielles Bussystem für PC-Peripherien. Es können bis zu 127 Geräte angeschlossen werden. Der Bus hat eine hierarchische Struktur, wobei der Zentralrechner 14 als Master ausgebildet ist und in der Hierarchie an oberster Stelle steht. Der USB unterstützt in der Version USB1.1 zwei unterschiedliche Übertragungsraten von 1,5 MB und 12 MB. Dabei wird die Übertragungsrate 1,5 MB für Low-Speed-Devices, wie beispielsweise Tastaturen, Monitoren und Mäuse eingesetzt. Full-Speed-Devices, wie beispielsweise Audio- und Video-Anwendungen haben eine Übertragungsrate von 12 MB.

Der USB 12 ist als Zweidrahtleitung ausgebildet und umfasst eine erste Signalleitung D+ und eine zweite Signalleitung D-, die jeweils mit Eingängen 48, 50, 52, 54 der Signalkoppler 24, 26 verbunden sind.

Die Signalkoppler 24, 26 weisen vorzugsweise im Wesentlichen den gleichen Aufbau auf. So enthält jeder Signalkoppler 24, 26 einen Leitungstreiber 56, dessen beide Ausgänge 58, 60 jeweils mit den Signalleitungen D+ bzw. D- verbunden sind. Ferner sind Steuerleitungen 62, 64, 66 vorgesehen, wobei die Eingänge des downstream-Leitungstreibers 56 des Signalkopplers 26 direkt mit Ausgängen B, C, D der Ablaufsteuerung 42 verbunden sind, während die Eingänge 62, 64, 66 des upstream-Leitungstreibers 56 des Signalkopplers 24 über die galvanische Trenneinrichtung 18 mit Ausgängen b, c, d der Ablaufsteuerung 42 verbunden sind. Ferner weist jeder Signalkoppler 24, 26 einen Leitungsempfänger 68 mit zwei Eingängen 70, 72 auf, die jeweils mit der Signalleitung D+ bzw. der Signalleitung D- verbunden sind. Ein Ausgang 74 des vorzugsweise als Differentialverstärker ausgebildeten Leitungsempfängers ist entweder direkt oder über die galvanische Trenneinrichtung 18 mit der Ablaufsteuerung 42 verbunden. Des Weiteren ist ein zweiter Leitungsempfänger 76 zur Erkennung der Buszustände RESET, SE0 und NO DEVICE vorhanden, dessen Eingänge 78, 80 jeweils mit den Signalleitungen D+, D- verbunden sind und dessen Ausgang 82 mit einem Eingang f,F der Ablaufsteuerung 42 verbunden sind.

Die upstream-Signalleitung D+ ist über einen Widerstand 84 und ein Schaltelement 86 mit High-Potential verbindbar, wobei ein Steuereingang 88 des Schaltelementes 86 über die galvanische Trenneinrichtung mit einem Ausgang a der Ablaufsteuerung verbunden ist.

Schließlich ist die Ablaufsteuerung 42 mit einer Delay-Einrichtung 90 verbunden, in der steuerbare Laufzeitglieder L zur Erkennung/Generierung insbesondere der Buszustände IDLE (maximale Treiberzeit für den J-Zustand typischerweise 120 ns), die RESUME-Erkennung (downstream typischerweise 50µs) sowie die RESUME-Umschaltung (nach typischerweise 1,5 ms von upstream nach downstream) enthalten sind. Mit den Laufzeiten L werden die Signallaufzeiten der einzelnen Signale aufeinander abgestimmt. Dadurch werden Störspitzen unterdrückt und das relative Timing-Verhalten der USB-Spezifikation eingehalten.

An die galvanische Trennung des USB werden besondere Kriterien gestellt, insbesondere muss die Ablaufsteuerung in Echtzeit erfolgen, wozu eine sehr schnelle galvanische Trenneinrichtung 18 mit exaktem und reproduzierbarem Timing eingesetzt wird. Die Ablaufsteuerung 42 selbst enthält das busspezifische Signalprotokoll, womit in Abhängigkeit der aktuellen Buszustände Statusinformationen generiert und an die Signalkoppler direkt oder in die galvanische Trenneinrichtung 18 übertragen werden. In der nachfolgenden Tabelle sind die zur galvanischen Trennung notwendigen Buszustände aufgeführt und beschrieben.

| **Signal-/Leitungszustände des USB (Full-speed)** | | | |
|---|---|---|---|
| **D+/D-** | **Bezeichnung** | **Beschreibung** | **Treiber** |
| 1/1 | - | Nicht benutzt | - |
| 0/0 | - | Device nicht vorhanden | Deaktiv |
| 0/0 | SE0 | Single-Ended-0 | Aktiv |
| 1/0 | IDLE | Ruhezustand, Device vorhanden | Deaktiv |
| 1/0 | J | Differenzial 1 | Aktiv |
| 0/1 | K | Differenzial 0 | Aktiv |

| **Buszustände (Full-speed)** | | | |
|---|---|---|---|
| IDLE zu K | SOP | Start-Of-Packet (Edge from IDLE to K) | Aktiv |
| SE0, J, IDLE | EOP (Sequenz) | End-Of-Packet Sequenz: | |
| | | 1. SE0:2-Bit-Länge | Aktiv |
| | | 2. J: 1-Bit-Länge | Aktiv |
| | | 3. IDLE | Deaktiv |
| SEO | RESET | For >= 10ms (Downstream) | Aktiv |
| K, EOP | RESUME (Sequenz) | Remote-Wakeup Sequenz: | Aktiv |
| | | 1. K (upstream 1-15 ms) | |
| | | 2. EOP (downstream vom Master/Zentral) | s. EOP |

Im Folgenden soll die Ablaufsteuerung im Detail beschrieben werden. Im Systemzustand 0, dem downstream-seitig beispielsweise kein Gerät verbunden bzw. aktiv ist, ist der Leitungszustand 0/0, d. h. es ist kein Gerät/Device vorhanden und der Leitungstreiber 56 ist deaktiv. Ferner wird über die Ablaufsteuerung 42 am Ausgang a ein Signal derart angelegt, dass das Schaltelement 86 geöffnet ist. Wird nun downstream-seitig ein Gerät in die Busleitung eingeschleift bzw. aktiviert, wird ein IDLE-Zustand erkannt und das System wechselt in den Zustand 1. Am Ausgang a der Ablaufsteuerung 42 wird ein Signal derart erzeugt, dass das Schaltelement 86 aktiviert wird, so dass über den Widerstand 84 High-Potential an die Busleitung D+ angelegt wird. Dadurch wird upstream-seitig der IDLE-Zustand erzeugt und ein vorhandenes/aktives Gerät angezeigt. In diesem Zustand werden Signaländerungen am upstream-seitigen Eingang erkannt und gelangen laufzeitkompensiert (im Verhältnis 1:1) zum downstream-seitigen Ausgang. Gleichzeitig werden auch Signaländerungen am downstream-seitigen Eingang erkannt und gelangen ebenfalls laufzeitkompensiert (im Verhältnis 1:1) zum upstream-seitigen Ausgang. Liegt am downstream-seitigen Eingang für mehr als typischerweise 50 µs der Leitungszustand 0/0, wurde das Gerät abgezogen oder deaktiviert, woraufhin ein Wechsel in den Zustand 0 erfolgt. Liegt jedoch am downstream-seitigen Eingang für mindestens typischerweise 50 µs ein K-Zustand an, wird in einen Systemzustand 2 gewechselt. In diesem Systemzustand liegt am downstream-seitigen Eingang ein RESUME-Zustand an. Liegt dieser Zustand typischerweise ? 1,5 ms an, wird upstream-seitig und downstream-seitig ein K-Zustand getrieben. Liegt der Zustand länger als typischerweise 1,5 ms an, wird der upstream-seitige Treiber 56 deaktiviert. Der am upstream-seitigen Eingang anstehende Zustand wird zum downstream-seitigen Ausgang durchgeschaltet. Es erfolgt ein Wechsel in den Systemzustand 1.

Es ist anzumerken, dass ein J-Zustand up- oder downstream-seitig für typischerweise maximal 120 ns getrieben wird. Anschließend wird in den IDLE-Zustand gewechselt.

Zur Stromversorgung ist anzumerken, dass diese unter Berücksichtigung der verwendeten Bauteile und der Busspezifikation (Power Management) der upstream-Seite entnommen werden kann. Die Versorgung der galvanisch getrennten Seite kann alternativ über einen steuerbaren DC/DC-Wandler und einen Energiespeicher auf downstream-Seite erfolgen. Bei erhöhtem Energieverbrauch ist die Versorgung durch eine externe Einspeisung vorteilhaft. Der Einfachheit halber wird die Versorgung eines USB-Gerätes im Beispiel von der downstream-Seite her über externe Einspeisung vorgenommen

Auch besteht die Möglichkeit, die Schaltungsanordnung 40 in ein USB-Gerät zu integrieren. In diesem Fall kann die Energieversorgung für den Downstream-Teil aus der Geräteversorgung entnommen werden. Bei Bedarf ist die upstream-Seite über einen DC/DC-Wandler oder eine andere galvanisch getrennte Quelle zu versorgen.

Die galvanische Trennung des USB erlaubt den Einsatz in Bereichen, bei denen eine Trennung zum Schutz oder aus technischen Gründen notwendig ist. Durch die galvanische Trennung kann der USB in folgenden Bereichen eingesetzt werden:
- Medizintechnik, zum Schutz des Patienten (Isolation und Ableitstrom),
- Labortechnik, potentialfreie Messung sensibler Messgrößen,
- Gebäudetechnik, USB-Verbindung, welche sich über mehrere Räume, Stockwerke und Gebäude erstreckt, unabhängig der dabei auftretenden Potentialdifferenzen und
- Industrietechnik, dezentrale Schaltschrank-, übergreifende Steuerungs-, Erfassungs- und Ausgabesysteme.

Die Schaltungsanordnung 40 selbst kann als Modul zum Einbau in Geräte mit USB-Anschluss konzipiert werden. Eine galvanische Trennung von Fullspeed-Devices im Bereich von 2,5 kV ist gewährleistet. Auch werden RESET-, RESUME- und Poweranforderungen erfüllt, insbesondere wird auch ein Power-Down-Modus des HOST erkannt. Die Ablaufsteuerung 42 der erfindungsgemäßen Schaltungsanordnung 40 ist insbesondere auch geeignet, Module zur galvanischen Trennung des USB für 1,5 MB bereitzustellen. Auch können Stand-alone-Geräte zur galvanischen Trennung des USB für 1,5/12 MB betrieben werden. Als besonderer Vorteil ist anzumerken, dass galvanisch getrennte Analogmesswert-Erfassungs/Ausgabegeräte an USB sowie galvanisch getrennte Digital-Input/Output-Systeme (TTL und Industrie) realisierbar sind.

Insgesamt ist anzumerken, dass durch die erfindungsgemäße Schaltungsanordnung die besonderen Anforderungen des Universal-Seriellbusses (USB) insbesondere bezüglich exaktes Timing erfüllt werden.

Als weiterer Vorteil der Schaltungsanordnung ist zu erwähnen, dass durch Implementierung eines anderen busspezifischen Signalprotokolls eine Anpassung beispielsweise an einen 12C-Bus problemlos möglich ist.

Ferner ist anzumerken, dass durch die Verwendung der intelligenten Ablaufsteuerung 42 nicht nur komplexe Bussysteme wie USB und 12C galvanisch getrennt werden können, sondern durch die Verwendung entsprechender Transportmedien, wie beispielsweise Lichtleiter, kann eine fast beliebige Distanz zwischen den Busteilnehmern realisiert werden.

## Patentansprüche

1. Verfahren zur Übertragung von Signalen bidirektionaler Signalverbindungen (12),
**dadurch gekennzeichnet,**
**dass** ein aktueller Signalzustand der Signalverbindung (12) mittels Signalkoppler (24, 26) erkannt und zumindest einer Ablaufsteuerung (42) unmittelbar und/oder galvanisch getrennt zugeführt wird,
**dass** die zumindest eine Ablaufsteuerung (42) den aktuellen Signalzustand registriert und auswertet und in Abhängigkeit eines in der Ablaufsteuerung (42) hinterlegten spezifischen Signalprotokolls Status-/Steuerinformationen in Echtzeit erzeugt,
**dass** die Status- und/oder Steuerinformationen unmittelbar und/oder galvanisch getrennt zu dem Signalkoppler (24, 26) übertragen werden und
**dass** aus den Status- und/oder Steuerinformationen die zur Funktion der Signalverbindung (12) notwendigen Signalzustände erzeugt werden.

2. Verfahren nach Anspruch 1,
**dadurch gekennzeichnet,**
**dass** eine Datenrichtung der Signalkoppler durch die Ablaufsteuerung gesteuert wird.

3. Verfahren nach Anspruch 1 oder 2,
**dadurch gekennzeichnet,**
**dass** eine Laufzeitkompensation der zu übertragenden Signale durchgeführt wird, wobei insbesondere die Laufzeitkompensation über steuerbare Laufzeitglieder (L) zur Erkennung und/oder Generierung von Signal- oder Buszuständen wie beispielsweise IDLE, RESUME-Erkennung sowie RESUME-Umschaltung erfolgt.

4. Verfahren nach zumindest einem der vorherigen Ansprüche,
**dadurch gekennzeichnet,**
**dass** das spezifische Signalprotokoll zum Betreiben eines "Universal Serial Bus" (USB) als USB-Bussignalprotokoll oder zum Betreiben eines 12C-Busses als 12C-Bussignalprotokoll hinterlegt ist und entsprechende Bus-Timing-Spezifikationen enthält.

5. Verfahren nach zumindest einem der vorherigen Ansprüche,
**dadurch gekennzeichnet,**
**dass** in einem Grundzustand, wobei ein Leitungszustand 0/0 vorliegt, downstreamseitig und/oder upstreamseitig ein IDLE-Zustand erkannt wird, sobald upstream- und/- oder downstreamseitig ein Gerät aktiviert und/oder verbunden wird.

6. Verfahren nach zumindest einem der vorhergehenden Ansprüche,
**dadurch gekennzeichnet,**
**dass** durch Aktivierung eines Schaltelementes (86) upstream- und/oder downstreamseitig der IDLE-Zustand erzeugt und ein vorhandenes Gerät angezeigt wird, dass Signaländerungen auf der Signalverbindung (12) upstream- oder downstreamseitig erkannt und galvanisch getrennt auf die downstream- und/oder upstream-Steite, vorzugsweise laufzeitkompensiert im Verhältnis 1:1 übertragen werden.

7. Verfahren nach zumindest einem der vorhergehenden Ansprüche,
**dadurch gekennzeichnet,**
**dass** das Gerät deaktiviert und/oder abgetrennt ist, wenn downstreamseitig eine, durch die spezifischen Buseigenschaften, festgelegte Zeit (typischerweise mehr als 50 µs) der Leitungszustand 0/0 anliegt.

8. Verfahren nach zumindest einem der vorhergehenden Ansprüche,
**dadurch gekennzeichnet,**
**dass** in einen zweiten Betriebszustand (nach typischerweise 50 µs) umgeschaltet wird, wenn downstreamseitig für eine, durch die spezifischen Buseigenschaften, festgelegte Zeit (typisch 1,0 ms bis 15 ms) ein K-Zustand (Leitungszustand 0/1, Differenzial 0) anliegt, und/oder dass im zweiten Betriebszustand downstreamseitig ein RESUME-Zustand anliegt, dass upstream- und/oder downstreamseitig ein K-Zustand (für typischerweise 1,5 ms) getrieben wird, wenn der RESUME-Zustand weniger als die durch die spezifischen Buseigenschaften festgelegte Zeit (typisch 1,0 ms bis 15 ms) anliegt und dass upstreamseitig ein Treiber deaktiviert wird, wobei der upstreamseitig anliegende Zustand downstreamseitig übertragen und in den ersten Betriebszustand umgeschaltet wird.

9. Verfahren nach zumindest einem der vorhergehenden Ansprüche,
**dadurch gekennzeichnet,**
**dass** ein IDLE-Zustand (Leitungszustand 1/0, Differenzial 1) upstream- oder downstreamseitig vorzugsweise für 1,5 Bitlängen getrieben wird und anschließend in den IDLE-Zustand gewechselt wird.

10. Schaltungsanordnung (22, 40) zur galvanischen Trennung einer bidirektionalen Signalverbindung (12), umfassend einen ersten Signalkoppler (24) und einen zweiten Signalkoppler (26) sowie eine galvanische Trenneinrichtung (18), über die die Signalkoppler (24, 26) miteinander gekoppelt sind,
**dadurch gekennzeichnet,**
**dass** die Schaltungsanordnung (22, 40) zumindest eine Ablaufsteuerung (28, 30, 42) mit einem implementierten spezifischen Signalprotokoll aufweist, dass die zumindest eine Ablaufsteuerung (28, 30; 42) mit den Signalkopplern (24, 26) zum Austausch von aktuellen Signalzuständen und/oder von Status- und/oder Steuerinformationen verbunden ist, wobei zumindest einer der Signalkoppler (24, 26) über die galvanische Trenneinrichtung (18) mit der Ablaufsteuerung (28, 30, 42) verbunden ist.

11. Schaltungsanordnung nach Anspruch 10,
**dadurch gekennzeichnet,**
**dass** die Ablaufsteuerung (42) downstreamseitig angeordnet ist, wobei der downstreamseitige Signalkoppler (26) zwischen der downstreamseitigen Signalverbindung und der Ablaufsteuerungen (42) angeordnet ist und wobei sämtliche zu dem upstream-seitigen Signalkoppler (24) führenden Signal- und/oder Datenleitungen (36, 38) über die galvanische Trenneinrichtung (18) geführt sind.

12. Schaltungsanordnung nach Anspruch 10 oder 11,
**dadurch gekennzeichnet,**
**dass** die Schaltungsanordnung (22) eine upstream- und eine downstreamseitige Ablaufsteuerung (28, 30) umfasst, wobei die Ablaufsteuerungen (28, 30) jeweils mit einem der Signalkoppler (24, 26) unmittelbar verbunden sind und wobei Informations-und/oder Datenleitungen zwischen den Ablaufsteuerungen und/oder den Signalkopplern über die galvanische Trenneinrichtung (18) zum Austausch von Status- und/oder Dateninformationen gekoppelt sind.

13. Schaltungsanordnung nach zumindest einem der Ansprüche 10 bis 12,
**dadurch gekennzeichnet,**
**dass** die Signalverbindung (12) als "Universal Serial Bus" (USB) ausgebildet ist und Signalleitungen D+, D- umfasst, wobei das in der oder den Ablaufsteuerungen (28, 30, 42) implementierte Signalprotokoll als USB-Bussignalprotokoll ausgebildet ist.

14. Schaltungsanordnung nach zumindest einem der Ansprüche 10 bis 13,
**dadurch gekennzeichnet,**
**dass** der Signalkoppler (24, 26) als Sende-Empfangseinheiten ausgebildet ist und einen steuerbaren Ausgangstreiber (56), einen ersten Leitungsempfänger (68) und einen zweiten Leitungsempfänger (76) aufweist, wobei insbesondere der erste Leitungsempfänger (68) vorzugsweise als Differentialverstärker ausgebildet ist und zwei Eingänge (70, 72) umfasst, die mit den Signalleitungen D+, D- verbunden sind und einen Ausgang (74), der mit einem Eingang (e,E) der Ablaufsteuerung (42) direkt und/oder über die galvanische Trennung (18) verbunden ist, wobei an dem Ausgang (74) die aktuellen Signal- bzw. Buszustände J und K abgreifbar sind, und/oder der zweite Leitungsempfänger (76) vorzugsweise als Schwellwertschalter ausgebildet ist, dessen Eingänge (78, 80) mit den Signalleitungen D+, D- verbunden sind und dessen Ausgang (82) mit einem Eingang (f, F) der Ablaufsteuerung (42) direkt und/oder über die galvanische Trenneinrichtung (18) verbunden ist, wobei an dem Ausgang (82) die aktuellen Signal- bzw. Buszustände RESET, SE0 und NO DEVICE anliegen.

15. Schaltungsanordnung nach zumindest einem der Ansprüche 10 bis 14 ,
**dadurch gekennzeichnet,**
**dass** der Ausgangs- oder Bustreiber (56) zwei mit den Signalleitungen D+, D- verbundene Ausgänge (58, 60) aufweist, an denen im aktiven Zustand des Ausgangstreibers Signal- und Buszustände der Signalleitung (12) erzeugbar sind und drei Eingänge (62, 64, 66) aufweist, die mit Steuerausgängen (b,B; c,C; d,D) der Ablaufsteuerung (42) verbunden sind, wobei ein erster Eingang (62) zur Aktivierung/Deaktivierung des Treibers (56), ein zweiter Eingang (64) zur Bestimmung eines aktiven J-oder K-Zustandes und ein dritter Eingang (66) zur Erzeugung eines RESET-oder SEO-Zustandes bei aktivem Ausgangstreiber vorgesehen ist.

16. Schaltungsanordnung nach zumindest einem der Ansprüche 10 bis 15,
**dadurch gekennzeichnet,**
**dass** die Schaltungsanordnung (40) vorzugsweise upstreamseitig ein Schaltelement (86) aufweist, mit dem vorzugsweise die Signalleitung D+ mit vorzugsweise HIGH-Potential verbindbar ist und dass ein Steuereingang (88) des Schaltelementes (86) über die galvanische Trennstrecke (18) mit einem Ausgang (a) der Ablaufsteuerung verbunden ist, und/oder dass die Schaltungsanordnung (40) eine mit der Ablaufsteuerung (42) verbundene Laufzeitkompensationseinrichtung (90) aufweist, mit der steuerbare Laufzeitglieder (L) zur Erkennung/Generierung beispielsweise der Zustände IDLE, RESUME-Erkennung sowie RESUME-Umschaltung einstellbar sind, wobei insbesondere die Ablaufsteuerung ein busspezifisches Signalprotokoll des 12C-Busses aufweist.

17. Schaltungsanordnung nach zumindest einem der Ansprüche 10 bis 16,
**dadurch gekennzeichnet,**
**dass** eine Stromversorgungseinrichtung upstream- und/oder downstreamseitig angeordnet ist, wobei die Energieversorgung über die Signalleitungen D+, D- erfolgt.

18. Schaltungsanordnung nach zumindest einem der Ansprüche 10 bis 17
**dadurch gekennzeichnet,**
**dass** die Schaltungsanordnung (40) upstream- und/oder downstreamseitig einen DC/DC-Wandler aufweist, und/oder dass die Schaltungsanordnung mit einer externen Stromversorgungseinrichtung verbunden ist, und/oder dass die Schaltungsanordnung in einem USB- oder 12C-Gerät integriert ist.

19. Schaltungsanordnung (22,40) zur Kopplung einer ersten Signalverbindung (12) mit einer zweiten Signalverbindung (12), umfassend einen ersten Ein-/Ausgangsport mit einem ersten Signalkoppler (24) und einen zweiten Ein-/Ausgangsport mit einem zweiten Signalkoppler (26),
**dadurch gekennzeichnet,**
**dass** zumindest eine Ablaufsteuerung vorgesehen ist, in der ein zumindest einer Signalverbindung entsprechendes spezifisches Signalprotokoll implementiert ist und dass die zumindest eine Ablaufsteuerung mit den Signalkopplern zum Austausch von aktuellen Signalzuständen und/oder von Status-/Steuerinformationen verbunden ist.

20. Verfahren zur Kopplung einer ersten Signalverbindung mit einer zweiten Signalverbindung ,
**dadurch gekennzeichnet,**
**dass** Signalzustände einer ersten Signalverbindung erfasst und ausgewertet werden und dass entsprechend eines spezifischen Signalprotokolls Status-/Steuerinformationen in Echtzeit erzeugt werden, welche zur Erzeugung von Signalzuständen der zweiten Signalverbindung verwendet werden.
